# EUROPÄISCHE PATENTSCHRIFT

(11) **EP 3 542 606 B1**
(45) Veröffentlichungstag und Bekanntmachung des Hinweises auf die Patenterteilung: **03.03.2021**
(21) Anmeldenummer: 18163557.4
(22) Anmeldetag: 23.03.2018
(51) Int. Cl.: A01B 33/08, A01B 33/06

(54) **KREISELEGGE UND EINGANGSGETRIEBE FÜR EINE KREISELEGGE**
ROTARY HARROW AND INPUT TRANSMISSION FOR A ROTARY HARROW
HERSE ROTATIVE ET TRANSMISSION D'ENTRÉE POUR UNE HERSE ROTATIVE

(43) Veröffentlichungstag der Anmeldung: 25.09.2019
(73) Patentinhaber: Kverneland AS, 4353 Klepp St. (NO)
(72) Erfinder: Kottenstedde, Gregor, 59320 Ennigerloh (DE)
(74) Vertreter: Bittner, Thomas L.

(56) Entgegenhaltungen:
- EP-B1- 1 754 404
- EP-B1- 2 123 142
- DE-A1-102011 010 761

## Beschreibung

Die Erfindung betrifft eine Kreiselegge und ein Eingangsgetriebe für eine Kreiselegge.

### Hintergrund

Kreiseleggen sind Bodenbearbeitungsmaschinen für den Einsatz in der Landwirtschaft. Hierbei können mehrere Kreiselwerkzeuge vorgesehen sein, welche an einer zugeordneten Welle befestigt sind, die ihrerseits form- oder kraftschlüssig mit einem zugeordneten Stirnrad verbunden ist, auf welche eine Antriebsbewegung eingeleitet wird. Mehrere solcher Stirnräder können in einer Getriebewanne angeordnet sein. Stirnräder benachbarter Kreiselwerkzeuge greifen ineinander. Mithilfe eines Eingangsgetriebes wird eine rotierende Antriebsbewegung auf die Anordnung von Stirnrädern übertragen, um die Kreiselwerkzeuge im Betrieb zu drehen. Das Eingangsgetriebe kann mit einer Gelenkwelle eines Traktors oder Schleppers verbunden werden. Eine solche Kreiselegge ist beispielsweise aus dem Dokument EP 0 713 635 A2 bekannt.

Gemäß dem Dokument DE 10 2004 026 388 B4 kann das Eingangsgetriebe mit einem Wechselradgetriebe gebildet sein, bei dem zumindest eines der Zahnräder lösbar auf der zugeordneten Welle angeordnet ist. Das Eingangsgetriebe ist mit einer Kegelzahnradanordnung ausgeführt.

Weitere Kreiseleggen sind aus den folgenden Dokumenten bekannt: EP 1 574 120 B1, EP 1 754 404 B1 sowie EP 2 123 142 B1.

### Zusammenfassung

Aufgabe der Erfindung ist es, eine Kreiselegge sowie ein Eingangsgetriebe für eine Kreiselegge anzugeben, bei denen das Eingangsgetriebe platzsparend in die Antriebseinrichtung der Kreiselegge integrierbar ist, wobei eine funktionsgerechte Einleitung der Antriebsbewegung unterstützt wird.

Zur Lösung sind eine Kreiselegge sowie ein Eingangsgetriebe für eine Kreiselegge nach den unabhängigen Ansprüchen 1 und 12 geschaffen. Ausgestaltungen sind Gegenstand von abhängigen Unteransprüchen.

Nach einem Aspekt ist eine Kreiselegge geschaffen, die eine Getriebewanne sowie Stirnräder aufweist, die in der Getriebewanne nebeneinanderliegend und miteinander im Eingriff stehend angeordnet sind. Die Stirnräder sind jeweils verdrehfest auf einer zugeordneten in der Getriebewelle gelagerten Rotorwelle angeordnet. Die Kreiselegge weist weiterhin ein den Stirnrädern zum Einleiten einer Antriebskraft zugeordnetes Eingangsgetriebe auf. Bei dem Eingangsgetriebe sind eine Eingangswelle, eine Ausgangswelle sowie ein Zahnradgetriebe vorgesehen, welches zwischen der Eingangswelle und der Ausgangswelle eine Antriebsrotation übertragend angeordnet ist. Das Eingangsgetriebe weist weiter ein Antriebszahnrad, welches verdrehfest auf der Ausgangswelle angeordnet ist, und ein Getriebegehäuse mit einer Getriebehülse auf, in die die Ausgangswelle zumindest abschnittsweise eingesteckt ist. Das Antriebszahnrad steht durch eine Gehäuseöffnung in der Getriebehülse hindurch mit einem der Stirnräder im Eingriff.

Nach einem weiteren Aspekt ist ein Eingangsgetriebe für eine Kreiselegge mit einer Eingangswelle, einer Ausgangswelle sowie einem Zahnradgetriebe geschaffen, welches zwischen der Eingangswelle und der Ausgangswelle eine Antriebsrotation übertragend angeordnet ist. Das Eingangsgetriebe weist ein Antriebszahnrad, welches verdrehfest auf der Ausgangswelle angeordnet ist, und ein Getriebegehäuse mit einer Getriebehülse auf, in die die Ausgangswelle zumindest abschnittsweise eingesteckt ist. Die Getriebehülse weist eine Gehäuseöffnung auf, durch welche hindurch das Antriebszahnrad mit einem zuordenbaren Stirnrad in Eingriff gebracht werden kann.

Das Eingangsgetriebe kann als eine Baugruppe ausgeführt sein, die für eine Anordnung mit Getriebewanne und Eingangsgetriebe an der Getriebewanne montierbar ist, wobei hierbei dann das Antriebszahnrad mit einem der Stirnräder in der Getriebewanne zum Eingriff kommt, Getriebewanne mit Stirnrädern und Eingangsgetriebe bilden dann eine selbstständige Anordnung, die in der Kreiselegge montierbar ist. Die Baugruppe kann als Vorschweiß-Baugruppe ausgeführt sein, welche dann mittels Fügen an der Getriebewanne angebracht wird. Das Fügen kann als Schweißen ausgeführt werden.

Das Zahnradgetriebe kann eine Anordnung von Kegelzahnrädern aufweisen.

Die Ausgangswelle kann in der Getriebehülse unterhalb des Antriebszahnrads mittels einer unteren Lagereinrichtung gelagert sein. Die untere Lageeinrichtung kann in der Getriebehülse einen Bauraum unterhalb des Antriebszahnrads zum Boden der Getriebehülse hin wenigstens zu 50 % ausfüllen. Der Bauraum kann von der unteren Lagereinrichtung im Wesentlichen eingenommen sein. Die untere Lageeinrichtung kann mit einem Zylinderrollenlager gebildet sein.

Die Antriebswelle kann in der unteren Lagereinrichtung lösbar gelagert sein. Beispielsweise kann die Antriebswelle aus dem Zylinderrollenlager herausgezogen werden. Hierbei kann vorgesehen sein, dass die Antriebswelle gegen ein Lösen von der unteren Lagereinrichtung mittels einer Sicherungseinrichtung gesichert ist, beispielsweise mit Hilfe eines Sicherungsrings. Zum Lösen der Antriebswelle aus der unteren Lagereinrichtung wird die Sicherungseinrichtung geöffnet oder entfernt, beispielsweise der Sicherungsring gelöst.

Die Ausgangswelle kann in der Getriebehülse oberhalb des Antriebszahnrads mittels einer oberen Lagereinrichtung gelagert sein. Ist die Antriebswelle nur mittels der oberen Lagereinrichtung oberhalb des Antriebszahnrads gelagert, kann eine sogenannte fliegende Lagerung hergestellt sein, bei der die Antriebswelle unterhalb des Antriebszahnrads frei von einer Lagerung ist.

Die Getriebehülse kann zumindest abschnittsweise in die Getriebewanne hineinragend angeordnet sein, derart, dass ein Innenraum der Getriebehülse, in welchem sich ein Wellenabschnitt der Ausgangswelle mit dem Antriebszahnrad erstreckt, von einem Innenraum der Gehäusewanne getrennt gebildet ist, in welchem die Stirnräder aufgenommen sind. Die Getriebehülse kann an die Gehäusewanne von außen angesetzt sein. Hierbei kann die Getriebehülse wenigstens abschnittsweise in eine an der Gehäusewanne gebildete Ausnehmung eingesetzt sein.

Ein Boden der Getriebewanne und ein Boden der Getriebehülse können in einer gemeinsamen Ebene angeordnet sein, die im Wesentlichen horizontal ausgerichtet sein kann. Der Boden der Getriebewanne und der Boden der Getriebehülse können fluchtend miteinander angeordnet sein. Der Boden der Getriebewanne mit wenigstens teilweise hierin integriertem Boden der Getriebehülse kann im Bereich des Bodens der Getriebehülse frei von einem äußeren Überstand ausgeführt sein.

Der Boden der Getriebehülse kann an dieser lösbar montiert sein. Beispielsweise kann der Boden der Getriebehülse nach unten abnehmbar sein, wobei eine Montage des Bodens der Getriebehülse zum Beispiel mittels einer oder mehrerer Schrauben ausgeführt sein kann. Alternativ kann der Boden an der Getriebehülse gefügt sein, zum Beispiel mittels Schweißen.

Ein erster Innenteilraum, der im Getriebegehäuse zumindest teilweise in der Getriebehülse gebildet ist, kann von einem zweiten Innenteilraum im Getriebegehäuse durch eine innere Wand getrennt sein, wobei die Ausgangswelle mittels einer Wellendichtung durch die innere Wand dichtend hindurchgeführt ist. Die Wellendichtung kann mit einer Radialwellendichtung gebildet sein.

Die Gehäuseöffnung kann mit einem Durchbruch in der Getriebehülse gebildet sein. Der Durchbruch kann auf einen Bereich beschränkt sein, in welchem sich das Antriebszahnrad des Eingangsgetriebes und das zugeordnete Stirnrad, mit welchem das Antriebszahnrad zum Eingriff kommt, gegenüberstehen.

Das Getriebegehäuse kann nicht lösbar mit der Gehäusewanne gefügt sein. Die nicht lösbare Verbindung zwischen dem Getriebegehäuse und der Gehäusewanne kann geschweißt sein. Alternativ kann das Getriebegehäuse lösbar an der Gehäusewanne montiert sein, beispielsweise mittels einer Schraubverbindung. Auf diese Weise kann das Eingangsgetriebe als wechselbares Getriebe bereitgestellt sein.

Im Bereich eines Durchbruchs kann ein Montageflansch aufgenommen sein. Der Montageflansch kann an der Gehäusewanne lösbar oder nicht lösbar montiert sein, beispielsweise mittels Fügen oder einer Schraubverbindung.

In Verbindung mit dem Eingangsgetriebe für die Kreiselegge können die vorangehend im Zusammenhang mit der Kreiselegge beschriebenen Ausführungsformen, soweit technisch möglich, entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer Kreiselegge;
- Fig. 2: eine schematische perspektivische Darstellung einer Gehäusewanne;
- Fig. 3: eine schematische perspektivische Darstellung der Gehäusewanne aus Fig. 2, wobei ein Eingangsgetriebe hieran angeordnet ist;
- Fig. 4: eine schematische perspektivische Darstellung eines Abschnitts eines Antriebsbalkens einer Kreiselegge;
- Fig. 5: eine schematische perspektivische Detaildarstellung der Anordnung aus Fig. 4;
- Fig. 6: eine schematische perspektivische Darstellung eines Eingangsgetriebes für eine Kreiselegge und
- Fig. 7: eine schematische perspektivische Darstellung einer an einem Monatageflansch angeordneten Getriebehülse.

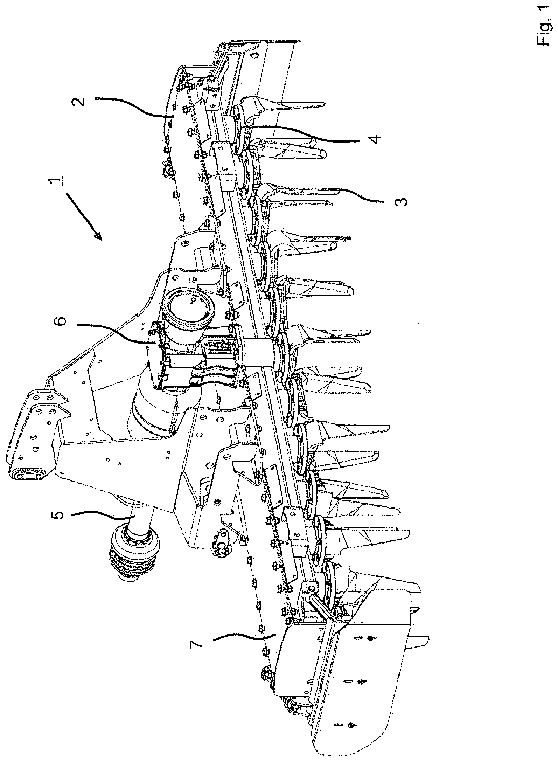

Fig. 1 zeigt eine schematische perspektivische Darstellung einer Kreiselegge 1, bei der an einem Arbeits- oder Getriebebalken 2 nebeneinanderliegend mehrere Kreiselwerkzeuge 3 aufgenommen sind. Die Kreiseiwerkzeuge 3 dienen der Bodenbearbeitung. Die Kreiselwerkzeuge 3 sind jeweils an einer zugeordneten Werkzeugaufnahme 4 montiert.

Über eine Gelenkwelle 5, die an einen Anschluss eines Traktors oder Schleppers (nicht dargestellt) koppelbar ist, wird eine rotierende Antriebsbewegung auf ein Eingangsgetriebe 6 gegeben. Das Eingangsgetriebe 6 überträgt die rotierende Antriebsbewegung auf einer Anordnung von Stirnrädern, die in einer Getriebewanne 7 des Arbeitsbalkens 2 angeordnet sind. Die Stirnräder sind mit den Werkzeugaufnahmen 4 verbunden, sodass die Antriebsbewegung übertragen wird und im Betrieb die Kreiselwerkzeuge 3 rotieren.

Für die Ausbildung einer Zahnradanordnung zum Übertragen der Antriebsbewegung in dem Eingangsgetriebe 6 sind verschiedene Ausführungsformen als solche bekannt. So können beispielsweise Kegelzahnräder zum Einsatz kommen. Ein oder mehrere der Zahnräder können lösbar auf der zugeordneten Welle in dem Eingangsgetriebe angeordnet sein.

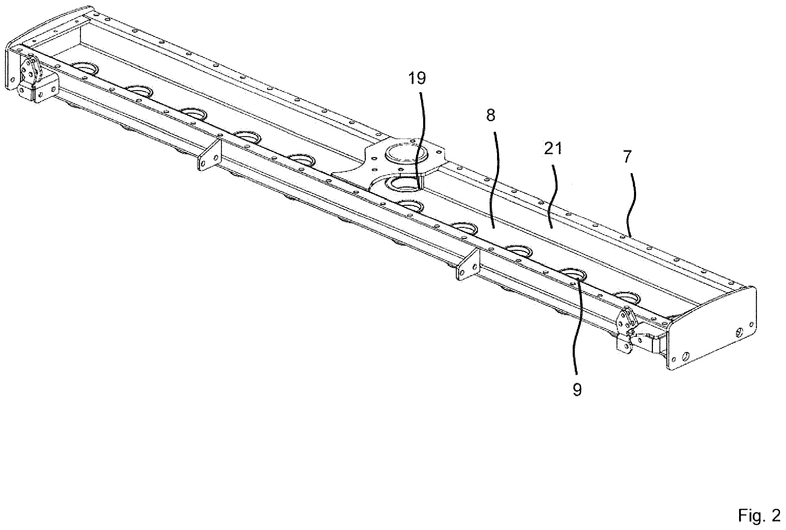

Fig. 2 zeigt eine schematische perspektivische Darstellung der Getriebewanne 7 im geöffneten Zustand. Am Boden 8 der Getriebewanne 7 sind mehrere Öffnungen 9 ausgebildet, durch welche hindurch dann die den Werkzeugaufnahmen 4 jeweils zugeordnete Welle verläuft.

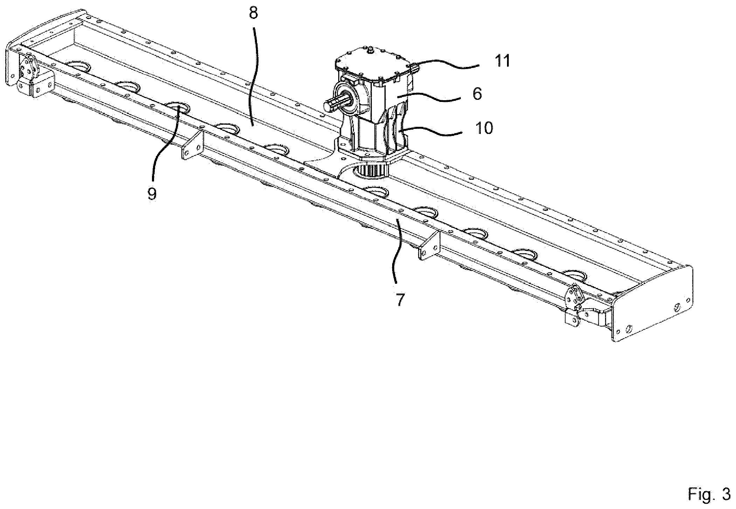

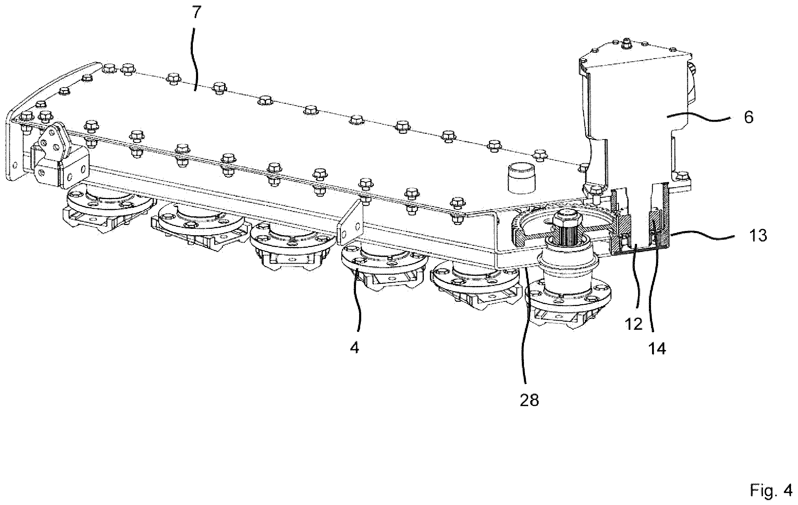

Fig. 3 zeigt eine schematische perspektivische Darstellung der Getriebewanne 7 aus Fig. 2 im geöffneten Zustand, wobei an der Getriebewanne 7 das Eingangsgetriebe 6 montiert ist, was lösbar oder nicht lösbar erfolgen kann. Im Fall einer nicht lösbaren Verbindung kann ein Getriebegehäuse 10 des Eingangsgetriebes 6 mit der Getriebewanne 7 gefügt sein. Eine Eingangswelle 11 des Eingangsgetriebes 6 erstreckt sich quer zur Längsrichtung der Getriebewanne 7. Über die Eingangswelle 11 wird die drehende Antriebsbewegung in das Eingangsgetriebe 6 eingeleitet. Über eine Anordnung von Zahnrädern ins Getriebegehäuse 10 wird die eingehende Drehbewegung auf eine Ausgangswelle 12 (vgl. Fig. 4 übertragen). Die Ausgangswelle 12 ist in dem Getriebegehäuse 10 wenigstens abschnittsweise in eine Getriebehülse 13 eingesteckt, in welcher auf der Ausgangswelle 12 drehfest ein Antriebszahnrad 14 angeordnet ist.

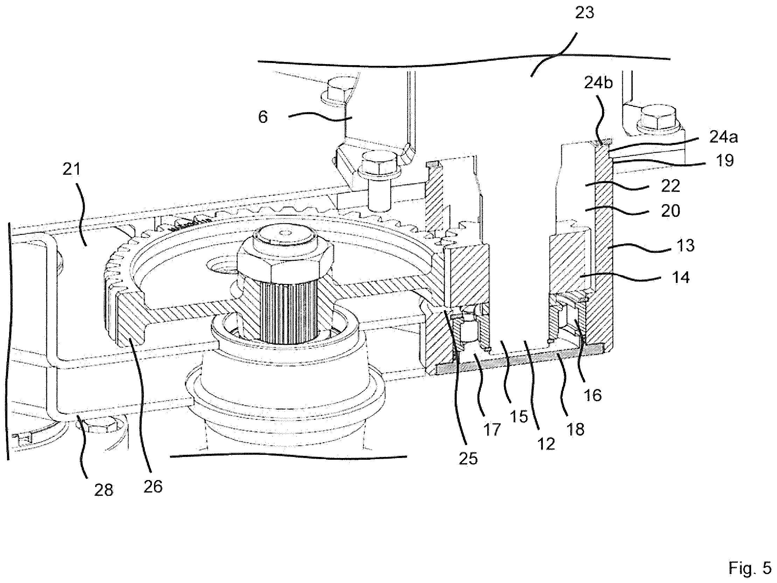

Fig. 5 zeigt eine perspektivische Detaildarstellung der Anordnung aus Fig. 4.

Ein unteres Ende 15 der Ausgangswelle 12 ist in der Getriebehülse 13 in einer unteren Lagereinrichtung 16 aufgenommen, welche bei der dargestellten Ausführungsform mit einem Zylinderrollenlager gebildet ist. Bei der gezeigten Ausführungsform nimmt die untere Lagereinrichtung 16 einen Bauraum 17 unterhalb des Antriebszahnrads 14 bis zum Boden 18 der Getriebehülse 13 im Wesentlichen vollständig ein. Der Boden 18 der Getriebehülse 13 ist lösbar an der Getriebehülse 13 montiert, beispielsweise unter Verwendung einer oder mehrerer Schraubverbindungen.

Wie sich insbesondere aus den Fig. 3 und 4 ergibt ist die Getriebehülse 13 des Getriebegehäuses 10 des Eingangsgetriebes 6 zumindest teilweise in einer Ausnehmung 19 an der Getriebewanne 7 eingesetzt. Ein Innenraum 20 in der Getriebehülse 13 ist hierdurch teilweise in einen Innenraum 21 der Getriebewanne 7 eingesetzt, von diesem aber durch die Getriebehülse 13 getrennt.

Auch der Innenraum 20 des Getriebegehäuses 10 ist mit Teilräumen 22, 23 gebildet. Im Bereich eines umlaufenden Absatzes 24a ist ein optionaler Sicherungsring 24b angeordnet, welcher einer axialen Sicherung einer Wellendichtung des Getriebes (nicht dargestellt) dienen kann. Der Absatz 24a und der Sicherungsring 24b umgeben einen Übergang zwischen den Teilräumen 22, 23, durch welchen hindurch die Ausgangswelle 12 sich erstreckt. Mittels des Absatzes 24a wird das Getriebegehäuse 10 des Eingangsgetriebes 6 beim Montieren zentriert.

Gemäß den Fig. 3 bis 5 steht das Antriebszahnrad 14 durch eine Gehäuseöffnung 25 hindurch mit einem Stirnrad 26 im Eingriff. Hierdurch wird die an die Ausgangswelle 12 übertragene drehende Antriebsbewegung auf das Stirnrad 26 in der Getriebewanne 7 übertragen, um die Kreiselwerkzeuge 3 anzutreiben. Zur weiteren Übertragung der Antriebsbewegung stehen benachbarte Stirnräder in der Getriebewanne 7 im Eingriff. Die Gehäuseöffnung 25 ist in der dargestellten Ausführungsform als Durchbruch ausgeführt, wobei sich die Gehäuseöffnung 25 auf einen Bereich beschränkt, in welchem sich das Antriebszahnrad 14 und das Stirnrad 26 gegenüberstehen.

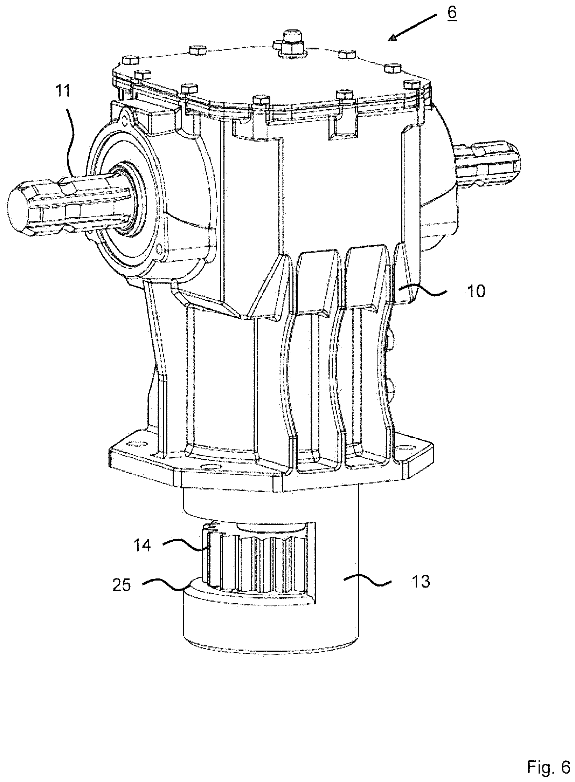

Fig. 6 zeigt eine schematische perspektivische Darstellung des Eingangsgetriebes 6, bei dem im unteren Teil die Gehäusehülse 13 mit der Gehäuseöffnung 25 angeordnet ist.

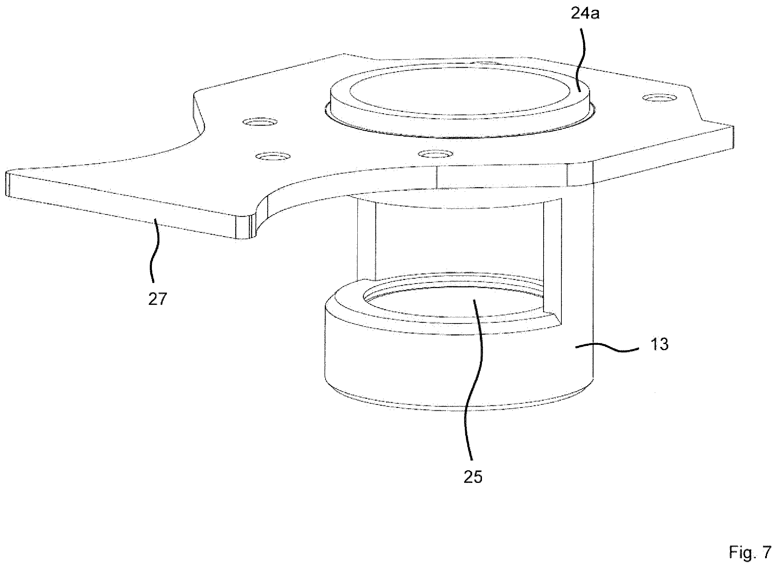

Fig. 7 zeigt eine schematische perspektivische Darstellung der Gehäusehülse 13 mit der Gehäuseöffnung 25 an einem Montageflansch 27.

Gemäß den Fig. 4 und 5 sind der Boden 18 der Getriebehülse 13 und ein Boden 28 der Getriebewanne 7 in einer gemeinsamen Ebene angeordnet, die in den Darstellungen in horizontaler Richtung verläuft.

## Patentansprüche

1. Kreiselegge (1), mit
- einer Getriebewanne (7);
- Stirnrädern (26), die in der Getriebewanne (7) nebeneinanderliegend und im Eingriff stehend angeordnet und jeweils verdrehfest auf einer zugeordneten in der Getriebewanne (7) gelagerten Rotorwelle gelagert sind; und
- einem den Stirnrädern (26) zum Einleiten einer Antriebskraft zugeordneten Eingangsgetriebe (6), mit
- einer Eingangswelle (11);
- einer Ausgangswelle (12);
- einem Zahnradgetriebe, welches zwischen der Eingangswelle (11) und der Ausgangswelle (12) eine Antriebsrotation übertragend angeordnet ist;
- einem Antriebszahnrad (14), welches verdrehfest auf der Ausgangswelle (12) angeordnet ist; und
- einem Getriebegehäuse (10) mit einer Getriebehülse (13), in die die Ausgangswelle (12) zumindest abschnittsweise eingesteckt ist;
**dadurch gekennzeichnet, dass** das Antriebszahnrad (14) durch eine Gehäuseöffnung (25) in der Getriebehülse (13) hindurch mit einem der Stirnräder (26) im Eingriff steht.

2. Kreiselegge (1) nach Anspruch 1, **dadurch gekennzeichnet, dass** die Ausgangswelle (12) in der Getriebehülse (13) unterhalb des Antriebszahnrads (14) mittels einer unteren Lagereinrichtung gelagert ist.

3. Kreiselegge (1) nach Anspruch 2, **dadurch gekennzeichnet, dass** die Antriebswelle (12) in der unteren Lagereinrichtung (16) lösbar gelagert ist.

4. Kreiselegge (1) nach mindestens einem der vorangehenden Ansprüche, **dadurch gekennzeichnet, dass** die Ausgangswelle (12) in der Getriebehülse (13) oberhalb des Antriebszahnrads (14) mittels einer oberen Lagereinrichtung gelagert ist.

5. Kreiselegge (1) nach mindestens einem der vorangehenden Ansprüche, **dadurch gekennzeichnet, dass** die Getriebehülse (13) zumindest abschnittsweise in die Getriebewanne (7) hineinragend angeordnet ist, derart, dass ein Innenraum (20) der Getriebehülse (13), in welchem sich ein Wellenabschnitt der Ausgangswelle (12) mit dem Antriebszahnrad (14) erstreckt, von einem Innenraum (21) der Gehäusewanne (7) getrennt gebildet ist, in welchem die Stirnräder (26) aufgenommen sind.

6. Kreiselegge (1) nach mindestens einem der vorangehenden Ansprüche, **dadurch gekennzeichnet, dass** ein Boden (28) der Getriebewanne (7) und ein Boden (18) der Getriebehülse (13) in einer gemeinsamen Ebene angeordnet sind.

7. Kreiselegge (1) nach mindestens einem der vorangehenden Ansprüche, **dadurch gekennzeichnet, dass** ein I Boden (18) der Getriebehülse (13) an dieser lösbar montiert ist.

8. Kreiselegge (1) nach mindestens einem der vorangehenden Ansprüche, **dadurch gekennzeichnet, dass** ein erster Innenteilraum (22), der im Getriebegehäuse (10) zumindest teilweise in der Getriebehülse (13) gebildet ist, von einem zweiten Innenteilraum (23) im Getriebegehäuse (10) durch eine innere Wand getrennt ist, wobei die Ausgangswelle (12) mittels einer Wellendichtung durch die innere Wand dichtend hindurchgeführt ist.

9. Kreiselegge (1) nach mindestens einem der vorangehenden Ansprüche, **dadurch gekennzeichnet, dass** die Gehäuseöffnung (25) mit einem Langloch-Durchbruch in der Getriebehülse gebildet ist.

10. Kreiselegge (1) nach mindestens einem der vorangehenden Ansprüche, **dadurch gekennzeichnet, dass** das Getriebegehäuse (10) nicht lösbar mit der Gehäusewanne (7) gefügt ist.

11. Kreiselegge (1) nach mindestens einem der vorangehenden Ansprüche, **dadurch gekennzeichnet, dass** im Bereich eines Durchbruchs eines Montageflanschs (27) aufgenommen ist.

12. Eingangsgetriebe für eine Kreiselegge (1), mit
- einer Eingangswelle (11);
- einer Ausgangswelle (12);
- einem Zahnradgetriebe, welches zwischen der Eingangswelle (11) und der Ausgangswelle (12) eine Antriebsrotation übertragend angeordnet ist;
- einem Antriebszahnrad (14), welches verdrehfest auf der Ausgangswelle (12) angeordnet ist; und
- einem Getriebegehäuse (10) mit einer Getriebehülse (13), in die die Ausgangswelle (12) zumindest abschnittsweise eingesteckt ist;
**dadurch gekennzeichnet, dass** die Getriebehülse (13) eine Gehäuseöffnung (25) aufweist, durch welche hindurch das Antriebszahnrad (14) mit einem zuordenbaren Stirnrad (26) in Eingriff gebracht werden kann.

## Claims

1. A rotary harrow (1), having
- a gearbox pan (7);
- spur gears (26), which are arranged side by side and engaged with each other in the gearbox pan (7), and which are each supported in a rotationally fixed manner on an associated rotor shaft supported in the gearbox pan (7); and
- an input gearbox (6) associated with the spur gears (26) for applying a driving force, having
- an input shaft (11);
- an output shaft (12);
- a gear drive, which is arranged between the input shaft (11) and the output shaft (12) such that it transfers a driving rotational force;
- a drive gear (14), which is arranged on the output shaft (12) in a rotationally fixed manner; and
- a gearbox housing (10) with a gear shaft bushing (13) into which the output shaft (12) is inserted at least in sections;
**characterized in that** the drive gear (14) is in engagement with one of the spur gears (26) through a housing opening (25) in the gear shaft bushing (13).

2. The rotary harrow (1) according to claim 1, **characterized in that** the output shaft (12) is supported in the gear shaft bushing (13) below the drive gear (14) by means of a lower bearing device.

3. The rotary harrow (1) according to claim 2, **characterized in that** the output shaft (12) is detachably supported in the lower bearing device (16).

4. The rotary harrow (1) according to any one of the preceding claims, **characterized in that** the output shaft (12) is supported in the gear shaft bushing (13) above the drive gear (14) by means of an upper bearing device.

5. The rotary harrow (1) according to at least one of the preceding claims, **characterized in that** the gear shaft bushing (13) is arranged such that it protrudes into the gearbox pan (7) at least in sections, in such a manner that an interior (20) of the gear shaft bushing (13), in which a shaft section of the output shaft (12) with the drive gear (14) extends, is formed such that it is separated from an interior (21) of the gearbox pan (7), in which the spur gears (26) are accommodated.

6. The rotary harrow (1) according to at least one of the preceding claims, **characterized in that** a bottom (28) of the gearbox pan (7) and a bottom (18) of the gear shaft bushing (13) are arranged in a common plane.

7. The rotary harrow (1) according to at least one of the preceding claims, **characterized in that** a bottom (18) of the gear shaft bushing (13) is detachably mounted to the same.

8. The rotary harrow (1) according to at least one of the preceding claims, **characterized in that** a first partial interior (22), which is formed at least partially in the gear shaft bushing (13) within the gearbox housing (10), is separated from a second partial interior (23) in the gearbox housing (10) by an inner wall, wherein the output shaft (12) is guided through the inner wall by means of a shaft seal.

9. The rotary harrow (1) according to at least one of the preceding claims, **characterized in that** the housing opening (25) is formed by a slotted opening in the gear shaft bushing.

10. The rotary harrow (1) according to at least one of the preceding claims, **characterized in that** the gearbox housing (10) is non-detachably joined to the gearbox pan (7).

11. The rotary harrow (1) according to at least one of the preceding claims, **characterized in that** a mounting flange (27) is accommodated in the region of an opening.

12. An input gearbox for a rotary harrow (1), having
- an input shaft (11);
- an output shaft (12);
- a gear drive, which is arranged between the input shaft (11) and the output shaft (12) such that it transfers a driving rotational force;
- a drive gear (14), which is arranged on the output shaft (12) in a rotationally fixed manner; and
- a gearbox housing (10) with a gear shaft bushing (13) into which the output shaft (12) is inserted at least in sections;
**characterized in that** the gear shaft bushing (13) has a housing opening (25), through which the drive gear (14) can be brought into engagement with an assignable spur gear (26).

## Revendications

1. Herse rotative (1), comprenant
- un caisson (7) ;
- des pignons (26), qui sont placés côte à côte et en étant en engrènement dans le caisson (7) et qui sont logés chacun de manière solidaire en rotation sur un arbre de rotor logé dans le caisson (7) ; et
- une transmission d'entrée (6), associée aux pignons (26), pour l'introduction d'une force d'entraînement,
- un arbre d'entrée (11) ;
- un arbre de sortie (12) ;
- une transmission par engrenage, laquelle est placée entre l'arbre d'entrée (11) et l'arbre de sortie (12), en transmettant une rotation d'entraînement ;
- une roue dentée motrice (14), laquelle est montée de manière solidaire en rotation sur l'arbre de sortie (12) ; et
- un carter d'engrenage (10) comprenant une douille d'engrenage (13), dans laquelle l'arbre de sortie (12) est inséré au moins par tronçons ;
**caractérisée en ce que** la roue dentée motrice (14) est en engrènement à travers une ouverture dans le carter (25) dans la douille d'engrenage (13) avec l'un des pignons (26).

2. Herse rotative (1) selon la revendication 1, **caractérisée en ce que** l'arbre de sortie (12) est logé dans la douille d'engrenage (13) en-dessous de la roue dentée motrice (14) au moyen d'un système de support inférieur.

3. Herse rotative (1) selon la revendication 2, **caractérisée en ce que** l'arbre de sortie (12) est logé de manière amovible dans le système de support (16) inférieur.

4. Herse rotative (1) selon au moins l'une quelconque des revendications précédentes, **caractérisée en ce que** l'arbre de sortie (12) est logé dans la douille d'engrenage (13) au-dessus de la roue dentée motrice (14) au moyen d'un système de support supérieur.

5. Herse rotative (1) selon au moins l'une quelconque des revendications précédentes, **caractérisée en ce que** la douille d'engrenage (13) est placée en saillant au moins par tronçons à l'intérieur du caisson (7), de telle sorte qu'un espace intérieur (20) de la douille d'engrenage (13), dans lequel s'étend un tronçon d'arbre de l'arbre de sortie (12) avec la roue dentée motrice (14) soit conçu séparément d'un espace intérieur (21) du caisson (7) dans lequel sont réceptionnés les pignons (26).

6. Herse rotative (1) selon au moins l'une quelconque des revendications précédentes, **caractérisée en ce qu'**un fond inférieur (28) du caisson (7) et un fond inférieur (18) de la douille d'engrenage (13) sont placés dans un plan commun.

7. Herse rotative (1) selon au moins l'une quelconque des revendications précédentes, **caractérisée en ce qu'**un fond inférieur (18) de la douille d'engrenage (13) est monté de manière amovible sur celle-ci.

8. Herse rotative (1) selon au moins l'une quelconque des revendications précédentes, **caractérisée en ce qu'**un premier espace intérieur partiel (22), qui est formé dans le carter d'engrenage (10) au moins partiellement dans la douille d'engrenage (13) est séparé d'un deuxième espace intérieur partiel (23) dans le carter d'engrenage (10) par une paroi intérieure, l'arbre de sortie (12) étant guidé de manière à assurer l'étanchéité au moyen d'un joint d'arbre à travers la paroi intérieure.

9. Herse rotative (1) selon au moins l'une quelconque des revendications précédentes, **caractérisée en ce que** l'ouverture dans le carter (25) est formée par un percement en trou allongé dans la douille d'engrenage.

10. Herse rotative (1) selon au moins l'une quelconque des revendications précédentes, **caractérisée en ce que** le carter d'engrenage (10) est assemblé de manière inamovible avec le caisson (7).

11. Herse rotative (1) selon au moins l'une quelconque des revendications précédentes, **caractérisée en ce qu'**une bride de montage (27) est réceptionnée dans la zone d'un percement.

12. Transmission d'entrée pour une herse rotative (1), comprenant
- un arbre d'entrée (11) ;
- un arbre de sortie (12) ;
- une transmission par engrenage, laquelle est placée entre l'arbre d'entrée (11) et l'arbre de sortie (12), en transmettant une rotation d'entraînement ;
- une roue dentée motrice (14), laquelle est montée de manière solidaire en rotation sur l'arbre de sortie (12) ; et
- un carter d'engrenage (10) comprenant une douille d'engrenage (13), dans laquelle l'arbre de sortie (12) est inséré au moins par tronçons ;
**caractérisée en ce que** la douille d'engrenage (13) comporte une ouverture dans le carter (25) à travers laquelle la roue dentée motrice (14) peut être amenée en engrènement avec un pignon (26) qui peut lui être associé.
